Europäisches Patentamt

European Patent Office

Office européen des brevets

(19)

(11) Veröffentlichungsnummer: **0 106 900**
**B1**

(12) # EUROPÄISCHE PATENTSCHRIFT

(45) Veröffentlichungstag der Patentschrift:
18.12.85

(51) Int. Cl.⁴: **G 01 L 1/22**

(21) Anmeldenummer: **82108825.9**

(22) Anmeldetag: **24.09.82**

(54) Kraftmesszelle.

(43) Veröffentlichungstag der Anmeldung:
02.05.84 Patentblatt 84/18

(45) Bekanntmachung des Hinweises auf die Patenterteilung:
18.12.85 Patentblatt 85/51

(84) Benannte Vertragsstaaten:
CH DE FR LI NL

(56) Entgegenhaltungen:
DE - B - 1 204 850
US - A - 2 867 707
US - A - 3 960 013

(73) Patentinhaber: **CARL SCHENCK AG,
Landwehrstrasse 55 Postfach 40 18, D-6100 Darmstadt
(DE)**

(72) Erfinder: **Theiss, Dieter, Dipl.-Ing., Habichtsweg 21,
D-6101 Rossdorf-1 (DE)**
Erfinder: **Bischoff, Bruene, Pfannenmüllerweg 20,
D-6100 Darmstadt (DE)**

(74) Vertreter: **Brand, Fritz, Dipl.-Ing., Carl Schenck AG
Patentabteilung Landwehrstrasse 55 Postfach 4018,
D-6100 Darmstadt (DE)**

EP 0 106 900 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Kraftmesszelle mit einem hermetisch abgeschlossenen Gehäuse und einem unter der Wirkung der zu messenden Kraft verformbaren Messglied, dessen Krafteinleitungsteil mit dem Gehäuse über eine im wesentlichen ringförmige Plattenfeder dichtend verbunden ist, die im unbelasteten Zustand der Kraftmesszelle gebeult ist.

Derartige Kraftmesszellen, die insbesondere als Wägezellen Verwendung finden, müssen im praktischen Einsatz gegen Schmutz, Feuchtigkeit, Chemikalien und ähnliche Umgebungseinflüsse geschützt werden. Deshalb werden die Kraftmesszellen mit einem Gehäuse versehen, dass das Messglied hermetisch umschliesst. Da sich das Messglied unter der Wirkung der eingeleiteten Kraft verformt, muss mindestens die hermetisch dichte Verbindung zwischen dem Gehäuse und dem Krafteinleitungsteil des Messglieds elastisch (weich) ausgebildet sein. Diese Verbindung wirkt jedoch als zum elastischen Messglied parallelgeschaltete Feder und bildet somit einen für die Kraftmessung an sich unerwünschten Kraftnebenschluss. Um die sich daraus ergebenden Messfehler möglichst klein zu halten, muss dieser Kraftnebenschluss sehr klein sein. Besonders störend ist ein zu grosser Kraftnebenschluss bei Kraftmesszellen für kleine Kräfte, insbesondere in der praktischen Ausführung unter 50 kN.

Die hierbei auftretenden Verformungswege liegen im allgemeinen im Bereich von 0,1-0,2 mm, können aber je nach Bauart des Messgliedes auch bis zu 0,5 mm betragen. Die erreichbare Messgenauigkeit der Messglieder ohne Kraftnebenschluss liegt beispielsweise bei weniger als 0,01% über den gesamten Messbereich. Man ist bestrebt, diese Messgenauigkeit auch beim praktischen Einsatz der Messglieder in hermetisch abgeschlossenen Kraftmesszellen zu erhalten. Dies ist nur möglich, wenn es gelingt, den Kraftnebenschluss sehr gering zu halten.

Es ist bekannt, die hermetisch dichte Verbindung zwischen dem Krafteinleitungsteil des Messgliedes und dem Gehäuse der Kraftmesszelle als Wellmembran oder Wellrohr auszuführen. Hierbei handelt es sich um gerillte Platten- oder Rohrfedern mit verhältnismässig grosser Elastizität, das heisst sehr flacher Federkennlinie, die somit auch nur einen geringen Kraftnebenschluss bedingt.

Einerseits ist der hierbei verbleibende Kraftnebenschluss aber insbesondere für Kraftmesszellen für kleine Kräfte immer noch zu hoch, andererseits besteht die Gefahr, dass sich die Rillen der Wellmembranen oder Wellrohre mit Verunreinigungen zusetzen. Ausserdem sind für die Herstellung Sonderwerkzeuge erforderlich, so dass die Herstellung verhältnismässig aufwendig ist.

Es ist zwar auch bekannt, die Verbindung des Krafteinleitungsteils des Messgliedes mit dem Gehäuse aus gummielastischen Werkstoffen auszuführen, die gegenüber metallischen Ausführungen sehr weich sind. Da diese gummielastischen Werkstoffe, insbesondere Gummi und Elastomere, für Wasserdampf durchlässig sind, bieten sie keinen ausreichenden Schutz des Messglieds und werden daher nicht als hermetisch dicht anerkannt. Ausserdem sind die elastischen Eigenschaften sehr temperaturabhängig.

Bei einer bekannten Kraftmesszelle der eingangs genannten Gattung (DE-B Nr. 1204850) wird als Verbindung des Krafteinleitungsteils des Messglieds mit dem Gehäuse der Kraftmesszelle eine ringförmige Plattenfeder verwendet, die in der Krafteinleitungsrichtung gebeult ist und die daher bei ihrer weiteren Verformung im Messbereich der Kraftmesszelle einen nichtlinearen Kraftnebenschluss darstellt. Diese Konstruktion geht davon aus, dass das verwendete Messglied ebenfalls eine nichtlineare Federkennlinie aufweist. Diese beiden nichtlinearen Federkennlinien des Messglieds und der hierzu parallelgeschalteten Plattenfeder sollen so aufeinander abgestimmt werden, dass die resultierende Kennlinie im Messbereich möglichst linear ist.

In der Praxis ist die Abstimmung dieser beiden nichtlinearen Kennlinien verhältnismässig schwierig, da für alle Messglieder mit unterschiedlichem Messbereich auch unterschiedliche Plattenfedern vorgesehen werden müssen, wobei es sich als schwierig erwiesen hat, die Federkennlinien der Plattenfedern bei der Herstellung in der jeweils gewünschten Weise zu beeinflussen. Die an sich erwünschte und für eine universelle Verwendbarkeit der Messglieder zweckmässige Ausführung der Messglieder mit linearer Kennlinie ist bei der beschriebene Zusammenschaltug mit einer nichtlinearen Plattenfeder ungünstig.

Aufgabe der Erfindung ist es daher, ein Kraftmesszelle der eingangs genannten Gattung zu schaffen, die unter Beibehaltung des Vorteils einer mit glatter Aussenfläche versehenen Plattenfeder als Verbindung zwischen dem Krafteinleitungsteil und dem Gehäuse einen möglichst geringen und im praktischen Einsatz vernachlässigbaren Kraftnebenschluss durch diese Plattenfeder bedingt.

Diese Aufgabe wird erfindungsgemäss dadurch gelöst, dass die Plattenfeder im unbelasteten Zustand der Kraftmesszelle entgegen der Krafteinleitungsrichtung gebeult ist, dass die Plattenfeder ein bistabile Federelement ist, und dass der Arbeitsbereich der Kraftmesszelle zwischen den beiden Wendepunkten der Federkennlinie der Plattenfeder liegt.

Der zwischen den beiden Wendepunkten einer derartigen bistabilen Plattenfeder liegende Abschnitt der Federkennlinie ist verhältnismässig flach, so dass im Bereich des zwischen den beiden Wendepunkten liegenden Federweges nur ein sehr geringer Kraftnebenschluss erfolgt. Die Federkennlinie verläuft im Bereich zwischen diesen beiden Wendepunkten fallend. Die Federsteifigkeit einer solchen bistabilen Plattenfeder ist im Bereich zwischen den beiden Wendepunkten sehr viel kleiner als bei allen bekannten Ausführungsformen.

Die Federkennlinie der Plattenfeder in dem Bereich zwischen den beiden Wendepunkten ist besonders flach, wenn gemäss einer Weiterbildung des Erfindungsgedankens die Höhe der Beulung der Plattenfeder gegenüber einer ebenen Stellung das ein- bis fünffache der Dicke der Plattenfeder beträgt.

Die erfindungsgemässe Kraftmesszelle weist einen sehr geringen Kraftnebenschluss ohne wesentliche thermische Beeinflussbarkeit auf. Die Aussenoberfläche des Kraftmesszellen-Gehäuses ist auch im Bereich der Plattenfeder glatt und ohne Vertiefungen, so dass sich Chemikalien, Schmutz oder dergleichen daran nicht festsetzen können. Eine hermetische Abdichtung des Innenraums der Kraftmesszelle ist vollständig gewährleistet. Hinzu kommt, dass die Plattenfeder einen wirksamen mechanischen Schutz bietet; sie ist genügend steif, um Beschädigungen zu vermeiden. Die Herstellung ist einfach und daher kostengünstig.

Weitere vorteilhafte Ausgestaltungen des Erfindungsgedankens sind Gegenstand von Unteransprüchen.

Die Erfindung wird nachfolgend an einem Ausführungsbeispiel näher erläutert, das in der Zeichnung dargestellt ist. Es zeigt:

Fig. 1 eine Kraftmesszelle im Schnitt, und

Fig. 2 die Federkennlinie einer gebeulten Plattenfeder.

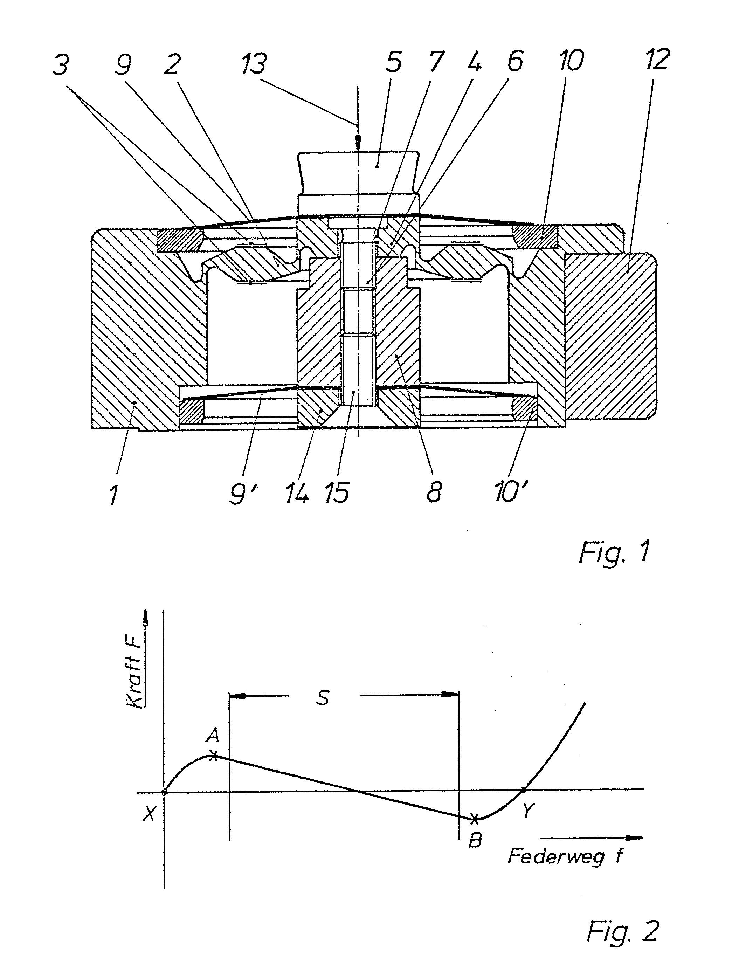

Die in Fig. 1 dargestellte Kraftmesszelle ist beispielsweise zum Einsatz als Wägezelle vorgesehen. Ein im wesentlichen zylindrisches Gehäuse 1 der Kraftmesszelle ist einstückig mit einem ringförmigen Federkörper 2 ausgeführt, der an seiner Oberseite und seiner Unterseite Dehnungsmessstreifen 3 trägt und das verformbare Messglied bildet, dessen Verformungen durch die Dehnungsmessstreifen 3 aufgenommen werden. Ebenfalls einstückig mit dem Messglied 2 ist ein zentrales Krafteinleitungsteil 4 ausgeführt. Ein an der Oberseite der Kraftmesszelle angeordneter Krafteinleitungskopf 5 ragt mit einem Gewindezapfen 6 durch eine Bohrung 7 im Krafteinleitungsteil 4 und ist in eine Buchse 8 eingeschraubt.

Zwischen dem Krafteinleitungskopf 5 und dem Krafteinleitungsteil 4 ist der innere Rand einer kreisringförmigen Plattenfeder 9 eingespannt, deren äusserer Umfang mit einem Einspannring 10 verschweisst ist. Der Einspannring 10 ist mit dem Gehäuse 1 verbunden, beispielsweise durch Lötung.

Die Anschlussleitungen für die Dehnungsmessstreifen 3 sind in einen elektrischen Anschlusskasten 12 geführt.

Die Plattenfeder 9 ist im unbelasteten Zustand der Kraftmesszelle entgegen der durch einen Pfeil 13 angedeuteten Krafteinleitungsrichtung gebeult, das heisst sie ist gegenüber einer ebenen Lage beim dargestellten Ausführungsbeispiel nach oben verformt. Diese Verformung kann durch eine bleibende Verformung bei der Herstellung der Plattenfeder 9 geschehen oder durch eine elastische Verformung und anschliessende Festlegung der Plattenfeder 9 im elastisch verformten Zustand durch die Verbindung mit dem Einspannring 10.

Die Plattenfeder 9 weist im nach oben gebeulten Zustand eine stabile Gleichgewichtslage auf (Punkt X in der Federkennlinie in Fig. 2). Eine zweite stabile Gleichgewichtslage Y der Plattenfeder 9 ergibt sich bei einer nach unten gebeulten Stellung. Die Plattenfeder 9 ist in der Kraftmesszelle so eingesetzt, dass der sich im vorgesehenen Messbereich ergebende Verformungsweg S zwischen den Wendepunkten A und B der Federkennlinie und damit zwischen den beiden stabilen Gleichgewichtslagen der Plattenfeder 9 zu liegen kommt. Dieser Bereich der Federkennlinie ist sehr flach und besitzt eine negative Federsteifigkeit. Der noch auftretende Kraftnebenschluss ist vernachlässigbar klein, so dass keinerlei Verfälschung der Messgenauigkeit der Messfeder 2 eintreten kann.

Beim dargestellten Ausführungsbeispiel ist die Plattenfeder 9 gegenüber einer ebenen Stellung um etwa den ein- bis zweifachen Betrag der Dicke der Plattenfeder 9 nach oben gebeult.

Die Buchse 8 ist an ihrem unteren Ende mit einem Anschlagring 14 verschraubt, dessen Unterseite bei maximaler Verformung des Messgliedes 2 sich an einer (nicht dargestellten) Anschlagfläche abstützt und damit eine Überlastsicherung für die Kraftmesszelle bildet. Mittels einer Schraube 15, die den Anschlagring 14 mit der Buchse 8 verbindet, ist zwischen diesen beiden Teilen der innere Rand einer zweiten Plattenfeder 9' eingespannt, die in gleicher Weise ausgeführt ist wie die bereits beschriebene obere Plattenfeder 9. Die Plattenfeder 9' ist ebenfalls nach oben gebeult und an ihrem äusseren Rand mit einem Einspannring 10' verschweisst, der mit dem Gehäuse 1 verbunden ist.

Die untere Plattenfeder 9' ermöglicht nicht nur in gleicher Weise wie die obere Plattenfeder 9 eine hermetisch abgedichtete und kraftnebenschlussfreie Übertragung der Messbewegung zwischen dem Innenraum des Gehäuses 1 und einem aussenliegenden Bauteil, nämlich dem Anschlagring 14, sondern bildet auch eine Luftdruckkompensation für die obere Plattenfeder 9. Wäre das Gehäuse 1 an seiner Unterseite starr verschlossen, so könnten auf die obere Plattenfeder 9 wirkende Luftdruckschwankungen zu einer Verfälschung des Messergebnisses führen. Die auf die untere Plattenfeder 9' wirkenden, gleichen Luftdruckschwankungen kompensieren diesen Einfluss jedoch vollständig.

Anstelle der beim Ausführungsbeispiel gezeigten kreisringförmigen Ausführung der Plattenfeder 9 kann auch eine abweichende Form verwendet werden, beispielsweise eine elliptische Form oder eine viereckige Form.

## Patentansprüche

1. Kraftmesszelle mit einem hermetisch abgeschlossenen Gehäuse (1) und einem unter der Wirkung der zu messenden Kraft verformbaren Messglied (2), dessen Krafteinleitungsteil (4) mit dem Gehäuse über eine im wesentlichen ringförmige Plattenfeder (9) dichtend verbunden ist, die im unbelasteten Zustand der Kraftmesszelle gebeult ist, dadurch gekennzeichnet, dass die Plattenfeder (9) im unbelasteten Zustand der Kraftmesszelle entgegen der Krafteinleitungsrichttung (13) gebeult ist, dass die Plattenfeder (9) ein bistabiles Federelement ist, und dass der Arbeitsbereich der Kraftmesszelle zwischen den beiden Wendepunkten (A, B) der Federkennlinie der Plattenfeder (9) liegt.

2. Kraftmesszelle nach Anspruch 1, dadurch gekennzeichnet, dass die Höhe der Beulung der Plattenfeder (9) gegenüber einer ebenen Stellung das ein- bis fünffache der Dicke der Plattenfeder (9) beträgt.

3. Kraftmesszelle nach einem der beiden Ansprüche 1 oder 2, dadruch gekennzeichnet, dass die Plattenfeder (9) an ihrem äusseren Umfang mit einem Einspannring (10) verbunden, vorzugsweise geschweisst ist.

4. Kraftmesszelle nach einem der Ansprüche 1 bis 3, dadurch gekennzeichnet, dass das Gehäuse (1) an seiner der Plattenfeder (9) entgegengesetzten Seite durch eine gleiche Plattenfeder (9') verschlossen ist, die an ihrem inneren Rand mit dem Krafteinleitungsteil (4) des Messglieds (2) verbunden ist.

## Claims

1. A load cell having a hermetically sealed housing (1) and a measuring member (2) which deforms under the effect of the force to be measured, the member (2) having a force introduction portion (4) which is connected sealingly to the housing by means of a substantially annular plate spring (9) which, when the cell is unloaded, is domed, characterised in that the plate spring (9) is a bistable spring element and in that the operating range of the cell lies between the two turning points (A, B) on the spring operating characteristic of the spring (9).

2. A load cell according to Claim 1, characterised in that the height of the doming of the plate spring (9) compared with a flat plane amounts to between one and five times the thickness of the plate spring (9).

3. A load cell according to Claim 1 or 2, characterised in that the plate spring (9) is connected, preferably by soldering, at its outer circumference to a tensioning ring (10).

4. A load cell according to one of Claims 1 to 3, characterised in that the housing (1) at the side opposite to that having the plate spring (9) is closed by a similar plate spring (9') which at its inner edge is connected to the force introduction portion (4) of the measuring member (2).

## Revendications

1. Transducteur de mesure de force comportant un boîtier (1) fermé hermétiquement et un organe de mesure (2) déformable sous l'action de la force à mesurer, dont la partie (4) sur laquelle s'appliquent les forces est reliée hermétiquement au boîtier au moyen d'une plaque élastique (9) sensiblement annulaire, qui est bombée dans l'état non chargé du transducteur, caractérisé en ce que la plaque élastique (9) est, à l'état non chargé du transducteur, bombée dans le sens opposé à la direction d'application des forces (13), en ce que la plaque élastique (9) est un élément élastique bistable, et en ce que le domaine de fonctionnement du transducteur est compris entre les deux points d'inflexion (A, B) de la caractéristique de la plaque élastique (9).

2. Transducteur selon la revendication 1, caractérisé en ce que la hauteur du bombement de la plaque élastique (9) par rapport à une position plane est égale à une à cinq fois l'épaisseur de la plaque élastique (9).

3. Transducteur selon l'une des revendications 1 ou 2, caractérisé en ce que la plaque élastique (9) est reliée, de préférence soudée, à un anneau de serrage (10) à sa périphérie extérieure.

4. Transducteur selon l'une des revendications 1 à 3, caractérisé en ce que le boîtier (1) est fermé, de son côté opposé à la plaque élastique (9), par une plaque élastique (9') semblable, qui est reliée à son bord extérieur à la partie de l'organe de mesure (2) où s'appliquent les forces.

0 106 900

Fig. 1

Fig. 2

5